# EUROPÄISCHE PATENTSCHRIFT

(11) **EP 0 591 670 B1**
(45) Veröffentlichungstag und Bekanntmachung des Hinweises auf die Patenterteilung: **07.05.1997**
(21) Anmeldenummer: 93113627.9
(22) Anmeldetag: 26.08.1993
(51) Int. Cl.: A21B 3/07, A21C 9/08, B65G 21/14

(54) **Abzieh- und Aufkrabbelvorrichtung für Teiglinge oder Gebäckstücke**
Insertion and extraction device for bread or pastry articles
Appareil pour l'insertion et l'extraction des morceaux de pâte à pain et des produits de boulangerie

(30) Priorität: 01.10.1992 DE 4232991
(43) Veröffentlichungstag der Anmeldung: 13.04.1994
(73) Patentinhaber: Werner & Pfleiderer Lebensmitteltechnik GmbH, 91550 Dinkelsbühl (DE)
(72) Erfinder: Dalheimer, Walter, Dipl.-Ing., D-91550 Dinkelsbühl (DE)
(74) Vertreter: Rau, Manfred, Dr. Dipl.-Ing.

(56) Entgegenhaltungen:
- EP-A- 0 231 831
- AT-B- 391 979
- DE-A- 1 632 356
- FR-A- 2 430 904
- GB-A- P23 763

## Beschreibung

Die Erfindung betrifft eine Abzieh-und Aufkrabbelvorrichtung für Teiglinge oder Gebäckstücke zur Beschickung und Entleerung von Backöfen.

Beschickungs- und Entleerungshilfen für Backöfen sind bekannt. Hierbei sind Einrichtungen vom einfachen Tuchabzieher bis hin zum automatischen Krabbelband, welches in mehreren Ebenen verfahrbar sein kann, im Einsatz.

In der DE-OS 29 34 369 ist z.B. ein Krabbelband beschrieben, welches an der Übergabekante eine Umlenkrolle mit einem Mindestdurchmesser besitzt, die ein korrektes Ablegen und Aufnehmen kleiner Backwaren nicht zulässt. Dieser Nachteil ist durch einen vorgesetzten Keil verringert. Dieser Keil hat jedoch eine unbewegliche Oberfläche, die eine nicht kontrollierbare Rutschbewegung der Teiglinge verursacht, und bedingt zusätzliche Einbauten im Ofen, um auch kleinere Backwaren bis zum Transportband zu schieben.

Ausserdem arbeitet diese Vorrichtung als Aufkrabbler nur nach einer Richtung. Das bedeutet, dass die Vorrichtung in einer Bedienposition komplett belegt werden muss und während dieser Zeit nicht verfahren werden kann.

Ferner ist aus der EP-A-0231831 eine Krabbelvorrichtung bekannt, deren Bandzunge als Umlenkschneide ausgebildet ist. Auch diese Vorrichtung arbeitet nur in einer Richtung und ist daher mit den oben genannten Nachteilen behaftet.

Ein beidseitig wirkendes Förderband, das einen verschiebbaren Schlitten umschlingt, ist ebenfalls bekannt (DE-AS 16 32 356). Dieses Förderband ist über Umlenkwalzen geführt und von einer Antriebswalze angetrieben. Die Umlenkwalzen an den beiden Bandzungen haben zwar den Vorteil eines reibungs-und verschleissarmen Lauf des Förderbandes, weisen aber ebenfalls den Nachteil eines zu grossen Durchmessers für das lagerichtige Aufnehmen bzw. Ablegen von Teiglingen auf. Diesen Nachteil überspielt die Vorrichtung der AS durch ein zusätzliches Übergabeband/Schleppband.

Der Erfindung liegt die Aufgabe zugrunde, eine Abzieh- und Aufkrabbelvorrichtung zur Beschickung und Entleerung von Backofen zu schaffen, die ein sicheres Aufnehmen und Abgeben auch von kleinen Teig- oder Gebäckstücken von einer zum Zeitpunkt der Übergabe feststehenden Fläche in beiden Richtungen des Verschiebetisches erlaubt.

Die Aufgabe wird erfindungsgemäss durch die im Patentanspruch 1 angegebenen Merkmale gelöst. Durch den geringen Radius der Umlenkschneiden ist sichergestellt, dass die jeweils aktive Umlenkschneide auch kleine Teig-oder Gebäckstücke präzise und sanft aufkrabbelt oder ablegt. Gleichzeitig ist das Förderband durch die Führung der beiden Rollenpaare an der nicht aktiven Bandzunge stets von der dortigen Umlenkschneide entlastet. Hierdurch bleibt das Förderband leicht beweglich.

Durch die Merkmale des Patentanspruches 2 ist zuverlässig eine reibungs- und verschleissarme Führung des Krabbelbandes in jeder Arbeitsposition gewährleistet.

Nach den Merkmalen des Anspruches 3 ist eine vorteilhafte Antriebs- und Bandlängenausgleichsart für das Förderband aufgezeigt.
Weitere vorteilhafte Antriebs- und Bandlängenausgleichsmöglichkeiten für ein endloses Förderband sind mit den Merkmalen des Patentanspruches 4 aufgezeigt.

In Weiterbildung der Erfindung gemäss Anspruch 5 kann der Verschiebetisch über einen Teleskoparm mit dem Grundgestell verbunden sein und die Antriebs-,Umlenk-oder Bandlängenausgleichsrolle wahlweise am Grundgestell und/oder am Teleskoparm angeordnet sein. Hierdurch ist eine bessere Variation des Verschiebetisches gegeben, wodurch auch mehrere schmale Stückgutteppiche (z.B. Teiglinge von einer schmalen Arbeitsplatte) nacheinander auf das Förderband aufgenommen werden können, um sie dann aufeinmal auf die gesamte Herdtiefe im Ofen abzulegen.

Die Erfindung wird nachstehend anhand einer Zeichnung näher beschrieben. Es zeigt
- Fig. 1: eine schematische Darstellung des Verschiebtisches 1 in zentraler Lage über dem Grundgestell 5
- Fig. 2: das Einfahren der Verschiebetisches 1 in einen Etagenbackofen 13
- Fig. 3: einen aus der zentralen Lage nach rechts verschobenen Verschiebetisch 1
- Fig. 4: einen aus der zentralen Lage nach links verschobenen Verschiebetisch
- Fig.5: einen Verschiebetisch 1, der durch einen Teleskoparm 12 mit dem Grundgestell 5 verbunden ist, wobei alle Rollen für das Förderband 2 am Teleskoparm 12 befestigt sind.
- Fig. 6: eine Darstellung gemäss Fig. 5, wobei die Rollen wahlweise am Grundgestell 5 und Teleskoparm 12 angeordnet sind.

Der Verschiebetisch 1 ist in einem Grundgestell 5 horizontal verschiebbar gelagert. Einzelheiten über Lagerung sowie Antrieb des Verschiebetisches 1 oder Förderband 2 sind in der Zeichnung nicht näher dargestellt. Beide Bandzungen des Verschiebetisches 1 sind als Umlenkschneiden 11 ausgebildet, die von einem in der Zeichnung gestrichelt angedeuteten Förderband 2 umschlungen sind. Die Enden des Förderbandes 2 sind mit zwei im Grundgestell 5 angeordneten Wickelrollen 6 und 7 verbunden. Beide Wickelrollen 6 und 7 sind voneinander unabhängig antreibbar (z.B. Trommelmotor) und steuerbar (z.B. SPS). An den Stirnwänden 5' des Grundgestelles 5 ist je ein Rollenpaar 3 bzw. 4 angeordnet. Die Länge des Verschiebetisches 1 entspricht dabei dem Mittenabstand a der beiden inneren Rollen der Rollenpaare 3;4.

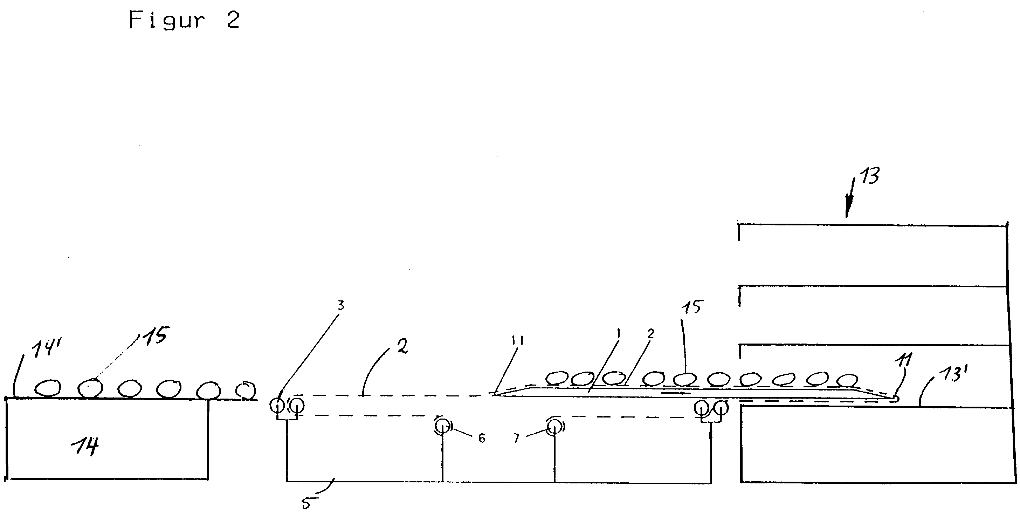

In Fig. 2 ist links vom Grundgestell ein Arbeitstisch 14 und rechts ein Etagenbackofen 13 schematisch dargestellt. Das Förderband 2 des Verschiebetisches 1 ist dabei bereits mit Teiglingen 15, die vorher von der Arbeitsfläche 14' aufgekrabbelt wurden, beladen. Der Verschiebetisch befindet sich bereits bis zur Hälfte im Ofen 13. Nach Erreichung der hinteren Ofenwand wird der Verschiebtisch 1 zurückgefahren und durch gleichzeitige Bewegung des Förderbandes 2 in Richtung hintere Ofenwand werden die Teiglinge 15 auf die Herdplatte 13' abgelegt. In der Zwischenzeit werden die nächsten Teiglinge 15 auf die Arbeitsplatte 14' als Stückgutteppich aufgelegt.

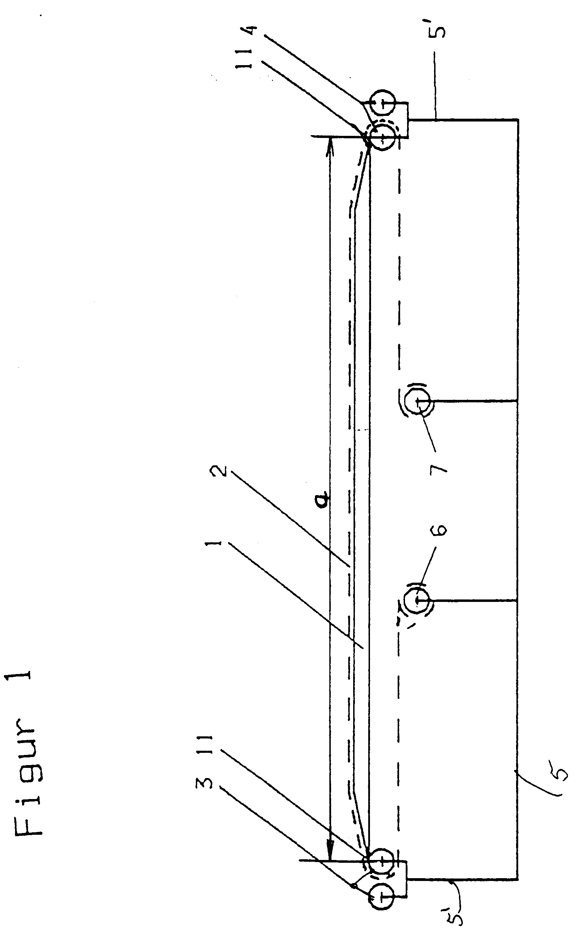

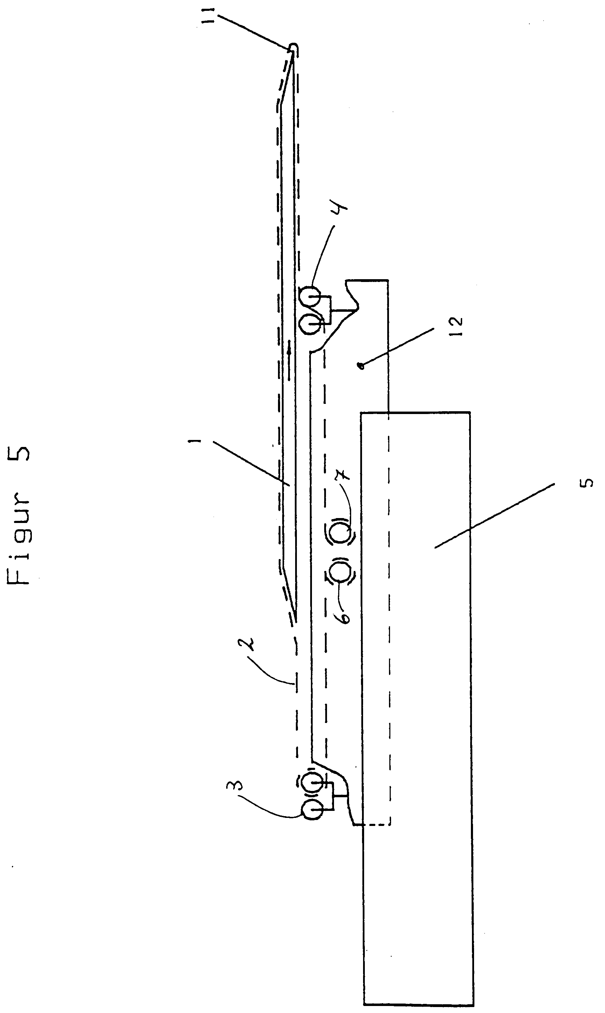

Bei einer Bewegung des Verschiebetisches 1 aus der zentralen Lage, die in Figur 1 dargestellt ist, z.B. nach rechts, wie in Fig. 2 oder 5 dargestellt, schmiegt sich das Förderband 2 einerseits um die rechte Umlenkschneide 11, andererseits um eine der Rollen des Rollenpaares 3. Durch abgestimmte Umdrehungen der Wickelrollen 6,7 kann gleichzeitig erreicht werden, dass das Förderband 2 relativ zum Verschiebetisch 1 stillsteht (reine Transportbewegung) oder der obere Trum des Förderbandes relativ zum Grundgestell 5 stillsteht (Aufnahmen von Stückgut an der rechten Umlenkschneide 11 von der Herdplatte 13'). Bei dem Aufnehmen von Stückgut kann durch eine leichte Relativbewegung des Förderbandes 2 zum Grundgestell 5 nach links die Aufnahme bei manchen Stückgütern noch unterstützt werden.

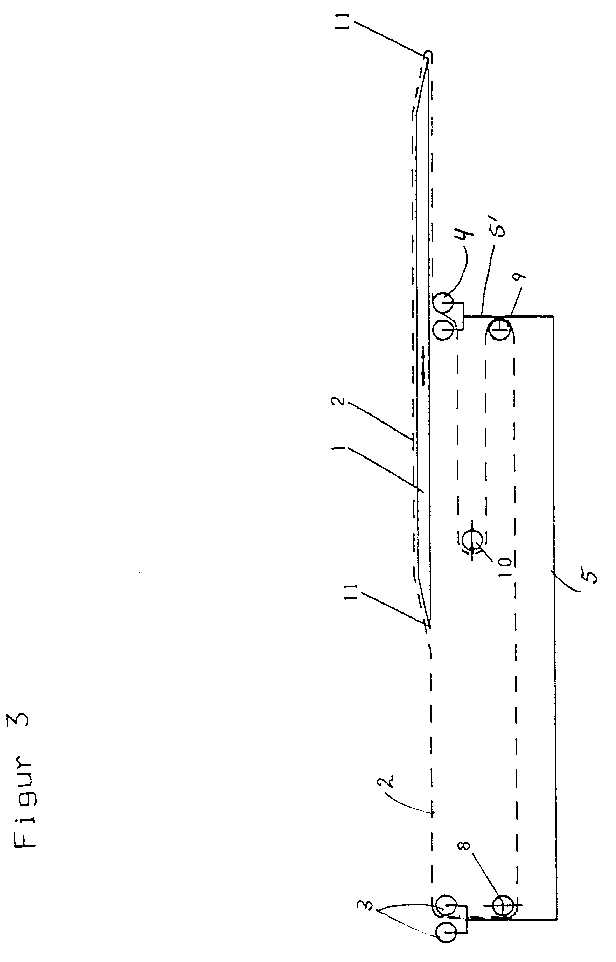

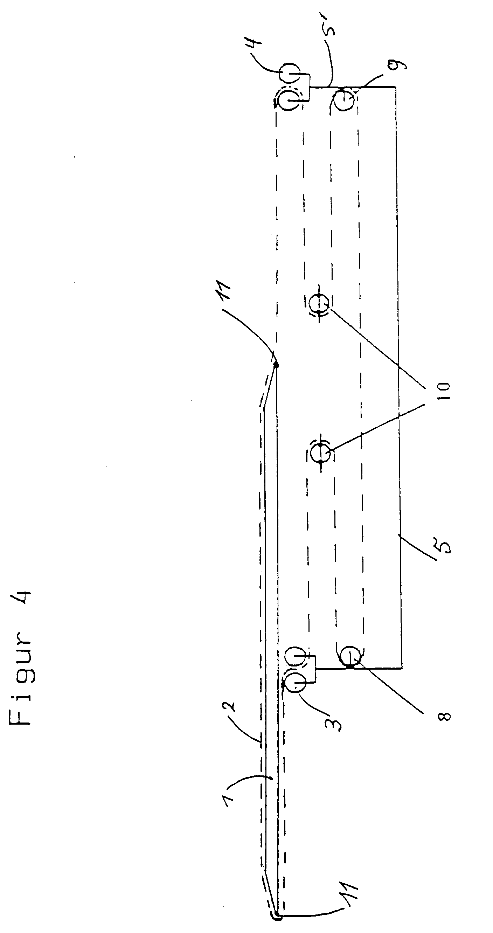

In Fig. 3 und 4 ist eine weitere Ausführungsform mit endlosem Förderband 2 dargestellt. Hierbei ist das Förderband 2 im Grundgestell 5 über Umlenkrollen 8,9,10 geführt. Eine der Umlenkrollen 8 oder 9 dient gleichzeitig als Antriebsrolle für das Förderband 2 und eine (Fig. 3) oder mehrere (Fig. 4) Tänzerrollen 10 bewirken den Bandlängenausgleich bei Bewegungen des Verschiebetisches 1.
In Fig. 4 ist erkennbar, dass bei einer Verschiebung nach links das Förderband 2 sich um die linke Umlenkschneide 11 des Verschiebetisches 1 schmiegt und auf der anderen Seite über die innere Rolle des Rollenpaares 4 geführt ist.

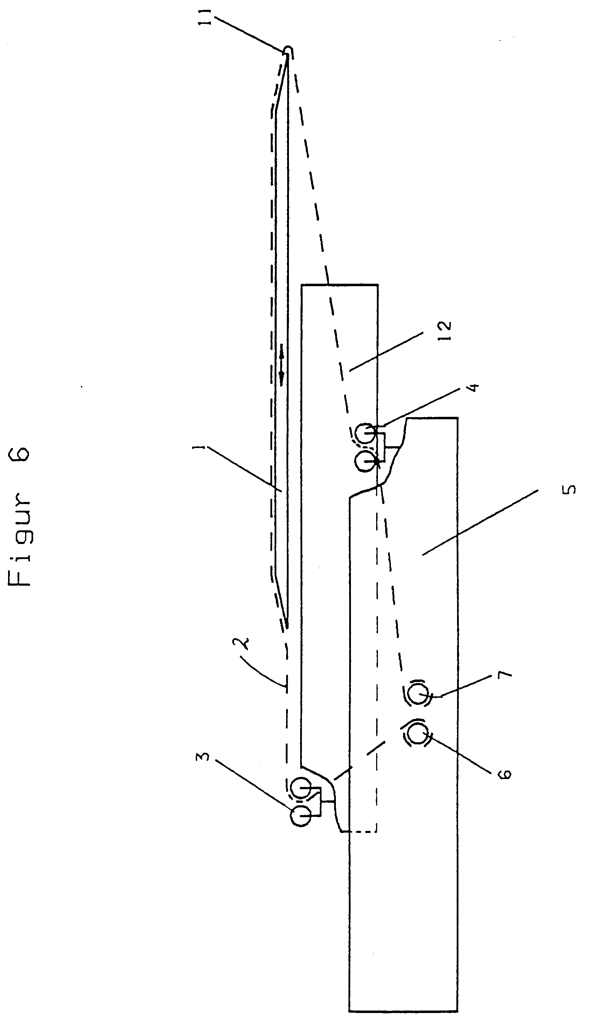

In den Darstellungen der Fig. 5 und 6 ist ist der Verschiebetisch 1 über einem Teleskoparm 12 mit dem Grundgestell 5 verbunden. Einzelheiten über Lagerung und Antrieb des Teleskoparmes 12 und Verschiebetisches 1 sind auch hier nicht näher dargestellt.
Alle erforderlichen Rollen (Antriebs-,Umlenk-,Ausgleichs-) für das Förderband 2 können dabei wahlweise weiterhin am Grundgestell 5 oder am Teleskoparm 12 (Fig. 5) oder teilweise am Grundgestell 5 und teilweise am Teleskoparm 12 (Fig. 6) befestigt sein.

Durch die erfindungsgemässe Anordnung von zwei Rollenpaaren in einem solchen Abstand, der zumindest der Länge des Verschiebetisches 1 entspricht, ist zu jeder Zeit sichergestellt, dass beim Betrieb des Förderbandes 2, dieses jeweils nur über eine scharfe Umlenkschneide 11 gezogen wird und an der gegenüberliegenden Seite durch die innere Rolle eines der Rollenpaare 3 oder 4 entlastet ist.

In weiteren Ausführungsformen kann das Grundgestell selbst über Hilfsvorrichtungen in an sich bekannter Weise horizontal quer zur Förderrichtung und vertikal, z.B. mittels Hubtisch oder Hubspindeln, bewegt werden. Dadurch lässt sich ein auf einer Fläche vorbereiteter Stückgutteppich auf eine andere Fläche, deren Höhen- und Seitenlage von der ersten Fläche unabhängig ist, transportieren, während auf der ersten Fläche bereits der nächste Stückgutteppich vorbereitet wird.

## Patentansprüche

1. Abzieh- und Aufkrabbelvorrichtung für Teiglinge (15) oder Gebäckstücke zur Beschickung und Entladung von Backöfen (13), bestehend aus einem in einem Grundgestell (5) angeordneten Verschiebetisch (1), der beidseitig mit Bandzungen ausgerüstet ist, über die ein mit wenigstens einer Antriebs- und Umlenkrolle in Verbindung stehendes, vor- und rückwärts antreibbares, Förderband (2) geführt ist, wobei der Verschiebetisch (1) mit seiner jeweils wirksamen Bandzunge einen Teig (14') oder Gebäckstückträger (13') zur Aufnahme oder Ablage der Teig- oder Gebäckstücke (15) entgegen deren Förderrichtung überfahren kann, dadurch gekennzeichnet, daß am Verschiebetisch (1) beidseitig die Bandzungen als Umlenkschneiden (11) gestaltet sind, wobei zwei Rollenpaare (3, 4) zur Führung des Förderbandes (2) so angeordnet sind, daß dieses nur an der jeweils wirksamen Bandzunge über die Umlenkschneide (11) geführt ist und an der gegenüberliegenden Bandzunge über eine Rolle des jeweiligen Rollenpaares (3 oder 4) umgelenkt ist.

2. Abzieh - und Aufkrabbelvorrichtung nach Anspruch 1, dadurch gekennzeichnet, daß die Rollenpaare (3, 4) jeweils an der Stirnseite (5') des Grundgestellts (5) so angeordnet sind, daß der Mittenabstand (a) der inneren Rollen der beiden Rollenpaare 3, 4) wenigstens der Länge des Verschiebetisches (1) entspricht.

3. Abzieh-und Aufkrabbelvorrichtung nach Anspruch 1 und 2, dadurch gekennzeichnet, dass im Grundgestell (5) zwei voneinander unabhängig antreibbare Wickelrollen (6) und (7) für das Förderband (2) angeordnet sind.

4. Abzieh-und Aufkrabbelvorrichtung nach Anspruch 1 und 2, dadurch gekennzeichnet, dass im Grundgestell (5) zwei Umlenkrollen (8:9), wovon eine als Antriebsrolle ausgebildet ist, und wenigstens eine Tänzerrolle (10) für ein als Endlosband ausgebildetes Förderband (2) angeordnet sind.

5. Abzieh- und Aufkrabbelvorrichtung nach Anspruch 1, dadurch gekennzeichnet, dass der Verschiebetisch (1) durch einen Teleskoparm (12) mit dem Grundgestell (5) verbunden ist, wobei die Wickel- und/oder Umlenkrollen sowie die Rollenpaare (3;4) am Grundgestell (5) und/oder am Teleskoparm (12) befestigt sind.

## Claims

1. Insertion and extraction device for dough pieces (15) or pastry articles for the feeding and unloading of baking ovens (13), comprising a sliding table (1), which is disposed in a base frame (5) and, on both sides, equipped with strip tongues, over which a conveyor belt (2) is guided, which is drivable forwards and backwards and which is in connection with at least one driving and deflection pulley, the strip tongue respectively effective of the sliding table (1) being able, for dough pieces or pastry articles to be received or deposited, to drive over a carrier of dough (14') or of pastry articles (13') counter to their conveying direction, characterized in that the strip tongues on both sides of the sliding table (1) are deflection edges (11), two pairs of pulleys (3, 4) being disposed for the guidance of the conveyor belt (2) such that the latter is guided only over the deflection edge (11) at the strip tongue respectively effective and that it is deflected over a pulley of the respective pair of pulleys (3 or 4) at the opposite strip tongue.

2. Insertion and extraction device according to claim 1, characterized in that a pair of pulleys (3, 4) at a time is disposed at the front (5') of the base frame (5) such that the center-to-center distance (a) of the inner pulleys of the two pairs of pulleys (3, 4) corresponds at least to the length of the sliding table (1).

3. Insertion and extraction device according to claim 1 and 2, characterized in that two coiling rolls (6) and (7) for the conveyor belt (2), which are drivable independently of each other, are disposed in the base frame (5).

4. Insertion and extraction device according to claim 1 and 2, characterized in that in the base frame (5), provision is made for two deflection pulleys (8; 9), one of which is a driving pulley, and for at least one dancer pulley (10) for a conveyor belt (2) in the form of an endless belt.

5. Insertion and extraction device according to claim 1, characterized in that the sliding table (1) is connected with the base frame (5) by a telescopic arm (12), the coiling rolls and/or deflection pulleys as well as the pairs of pulleys (3; 4) being fixed to the base frame (5) and/or to the telescopic arm (12).

## Revendications

1. Appareil pour l'insertion et l'extraction de morceaux de pâte à pain (15) et de produits de boulangerie pour le chargement et le déchargement de fours de boulanger (13), comprenant une table coulissante (1) qui est disposée dans un cadre de base (5) et qui, des deux côtés, est pourvue de langues en feuillard, sur lesquelles est guidée une courroie de transport (2) entraînable en avant et en arrière et étant en relation avec au moins un rouleau entraîneur et déflecteur, la table coulissante (1), avec sa langue en feuillard respectivement effective, pouvant passer sur un porteur de pâte à pain (14') ou de produits de boulangerie (13') pour la réception ou le dépôt de morceaux de pâte à pain ou de produits de boulangerie (15) à l'envers de leur sens de transport, caractérisé en ce que, des deux côtés de la table coulissante (1), les langues en feuillard sont réalisées comme des arêtes déflecteuses (11), deux paires de rouleaux (3, 4) étant disposées pour le guidage de la courroie de transport (2) de telle sorte que celle-ci soit guidée par-dessus l'arête déflecteuse (1) seulement sur la langue en feuillard effective et qu'elle soit déflectée par un rouleaux de la paire respective de rouleaux (3 ou 4) à la langue en feuillard opposée.

2. Appareil pour l'insertion et l'extraction selon la revendication 1, caractérisé en ce que les paires de rouleaux (3, 4) sont disposées sur le front (5') du cadre de base (5) de telle sorte que la distance de centre à centre (a) des rouleaux intérieurs des deux paires de rouleaux (3, 4) corresponde au moins à la longeur de la table coulissante (1).

3. Appareil pour l'insertion et l'extraction selon la revendication 1 et 2, caractérisé en ce que deux rouleaux enrouleurs (6) et (7) pour la courroie de transport (2), entraînables de façon indépendante l'un de l'autre, sont disposés dans le cadre de base (5).

4. Appareil pour l'insertion et l'extraction selon la revendication 1 et 2, caractérisé en ce que deux rouleaux déflecteurs (8; 9), dont l'un est un rouleau entraîneur, et au moins un rouleau danseur (10) pour une courroie de transport (2) en forme d'une courroie sans fin sont disposés dans le cadre de base (5).

5. Appareil pour l'insertion et l'extraction selon la revendication 1, caractérisé en ce que la table coulissante (1) est reliée au cadre de base (5) par la voie d'un bras télescopique (12), les rouleaux enrouleurs et/ou déflecteurs ainsi que les paires de rouleaux (3;4) étant fixés au cadre de base (5) et/ou au bras télescopique (12).
